# EUROPEAN PATENT APPLICATION

(11) **EP 1 168 786 A1**
(43) Date of publication of application: **02.01.2002**
(21) Application number: 00901959.7
(22) Date of filing: 27.01.2000
(51) Int. Cl.: H04M 1/73, H04M 1/00, H02J 7/00, H04B 7/26

(54) **PORTABLE PHONE AND METHOD FOR CONTROLLING SPEECH OUTPUT FROM PORTABLE PHONE**

(71) Applicant: MITSUBISHI DENKI KABUSHIKI KAISHA, Tokyo 100-8310 (JP)
(72) Inventor: YAMADA, Yoshiko Mitsubishi Denki Kabushiki Kaisha, Tokyo 100-8310 (JP)
(74) Representative: Popp, Eugen, Dr.
(86) International application number: JP0000447
(87) International publication number: WO0156260

(57) **Abstract**

In a portable telephone (10) that receives a first voice signal which is significant for communication of intentions between callers and a second voice signal other than the first voice signal together with a determination signal for determining whether the first voice signal is present or not and converts the voice signals that have been received into a sound for output, the received voice signals are converted into a sound for output on the basis of a result of sensing whether the first voice signal is present or not by the determination signal and a result of sensing the secondary battery remaining amount, whereby the electric power consumption of the output circuit can be reduced, and the user of the portable telephone (10) in the middle of the call can be made to recognize that the battery remaining amount has become less than or equal to a predetermined value.

## Description

### Technical Field

The present invention relates to a portable telephone onto which a battery that supplies electric power to its own circuits is mounted, and in particular to a technique for making the user of the portable telephone recognize that the remaining amount of the battery has decreased, and for extending the period of time in which a call can be made when the remaining amount of the battery has decreased.

### Background Art

A portable telephone has numerous advantages such as being capable of providing service without the need for constructing a large-scale infrastructure such as disposing a telephone line, unlike a wired telephone, and being capable of allowing communication to the other party at all times no matter where the user is or where the other party is. For this reason, the ratio of the spread of portable telephones is increasing at an extremely large increasing ratio, and the number of portable telephones is approaching the number of wired telephones.

The aforementioned advantages of the portable telephone are increasing all the more because the scale of circuits for realizing the portable telephones has become small and, therefore, the battery for supplying an electric power source to the portable telephone has been made smaller in scale. On the other hand, however, the portable telephone has an essential problem of the presence of a fear that it cannot be used when the remaining amount of the battery has decreased. For this reason, it is desired to sense the decrease in the remaining amount of the battery at an early time, and to make it possible to call as long as possible even if the remaining amount of the battery has decreased.

As the one that gives a warning of decrease in the remaining amount of the battery and extends the period of time in which a call can be made when the remaining amount of the battery of the portable telephone has decreased, there are the following ones.

As the one that gives a warning of decrease in the remaining amount of the battery, there is one disclosed in Japanese Patent Laying-Open No. 05-259983/1993, and as the one that extends the period of time in which the call can be made, there are ones disclosed in Japanese Patent Laying-Open No. 07-327004/1995 and Japanese Patent Laying-Open No. 09-252326/1997.

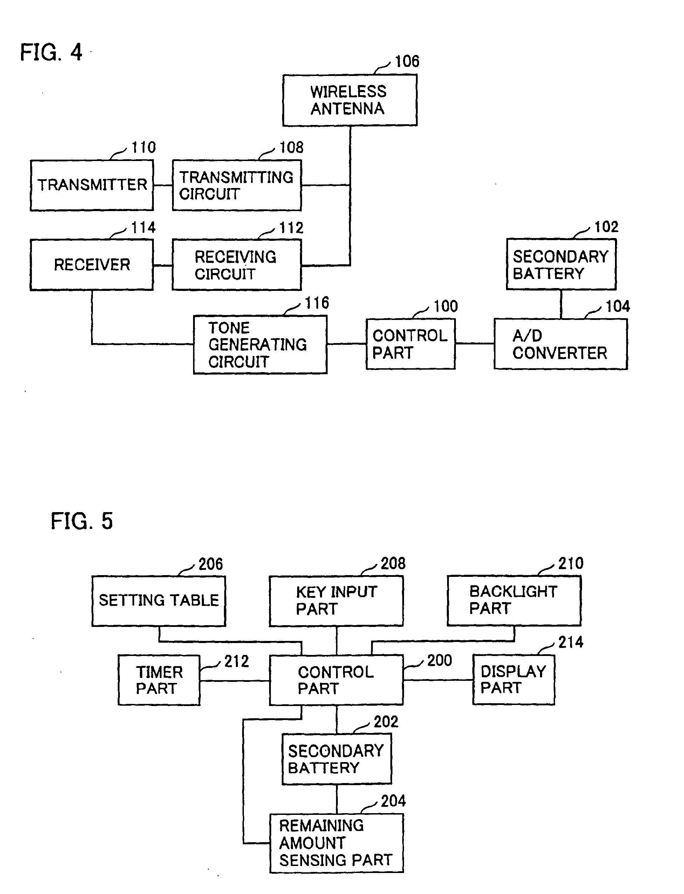

Referring to Fig. 4, the portable telephone disclosed in Japanese Patent Laying-Open No. 05-259983/1993 includes a secondary battery 102 for supplying electric power to each part of the portable telephone, an A/D (Analog/Digital) converter 104 connected to the secondary battery 102 for supervising the output voltage of the secondary battery 102 and for outputting a digital value corresponding to the output voltage to a control part 100, a wireless antenna 106 for transmitting and receiving data to and from another portable telephone, a transmitting circuit 108 connected to the wireless antenna 106 for performing data processing such as a coding process on a voice data to be transmitted, a transmitter 110 such as a microphone connected to the transmitting circuit 108, a receiving circuit 112 connected to the wireless antenna 106 for performing data processing such as a decoding process on the received data, a receiver 114 such as a speaker connected to the receiving circuit 112, a tone generating circuit 116 connected to the control part 100 and the receiver 114 for generating tone sound for giving a warning from the receiver 114, and the control part 100 for giving an instruction of generating the tone sound corresponding to the battery remaining amount to the tone generating circuit 116 and for controlling the whole of the portable telephone on the basis of the value input from the A/D converter 104.

This portable telephone operates in the following manner. The A/D converter 104 senses the output voltage of the secondary battery 102. The control part 100 instructs the tone generating circuit 116 to generate a tone sound corresponding to the battery remaining amount from the receiver 114 on the basis of a result of sensing by the A/D converter 104. The tone generating circuit 116 can warn stepwise to the user of the portable telephone from the receiver 114 when the remaining amount of the secondary battery 102 decreases. However, in this invention, the tone generating circuit 116 must be mounted, and also the electric power consumption of the tone generating circuit 116 is needed.

Referring to Fig. 5, the portable telephone disclosed in Japanese Patent Laying-Open No. 07-327004/1995 includes a display part 214, a key input part 208, a backlight part 210 for lighting the display part 214 and the key input part 208, a timer part 212 for managing the lighting time of the backlight part 210, a secondary battery 202 for supplying electric power to each part of the portable telephone, a remaining amount sensing part 204 connected to the secondary battery 202 for sensing the remaining amount of the secondary battery 202 with the use of stepwise threshold values, a setting table 206 in which the lighting time of the backlight part 210 is set in accordance with the remaining amount of the secondary battery 202, and a control part 200 for controlling the lighting time of the backlight part 210 in accordance with the remaining amount of the secondary battery 202 and for controlling the whole portable telephone.

This portable telephone operates in the following manner. The remaining amount sensing part 204 senses the remaining amount of the secondary battery 202 with the use of stepwise threshold values. The control part 200 controls the lighting time of the backlight part 210 on the basis of a result of sensing by the remaining amount sensing part 204 and the set contents of the setting table 206. By this, the lighting time of the backlight part 210 will be shorter than usual when the remaining amount of the secondary battery 202 decreases. Therefore, the period of time in which a call can be made can be extended at the time of decrease in the remaining amount of the secondary battery 202. However, in this invention, the timer part 212 must be mounted. Moreover, in this invention, it often happens that the user of the portable telephone cannot recognize that the remaining amount of the secondary battery has decreased because the user seldom takes a look at the display part 214 during the call.

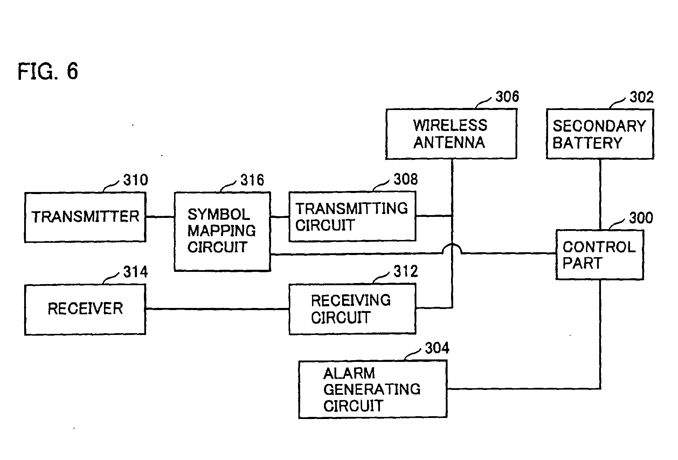

Referring to Fig. 6, the portable telephone disclosed in Japanese Patent Laying-Open No. 09-252326/1997 includes a secondary battery 302 for supplying electric power to each part of the portable telephone and for outputting an alarm signal when the battery remaining amount becomes less than or equal to a predetermined value, a wireless antenna 306 for transmitting and receiving data to and from another portable telephone, a transmitting circuit 308 connected to the wireless antenna 306 for performing data processing such as a coding process on the voice data to be transmitted, a transmitter 310 such as a microphone connected to the transmitting circuit 308, a receiving circuit 312 connected to the wireless antenna 306 for performing data processing such as a decoding process on the received data, a receiver 314 such as a speaker connected to the receiving circuit 312, an alarm generating circuit 304 connected to the control part 300 for generating an alarm, a symbol mapping circuit 316 connected to the transmitter 310, the transmitting circuit 308, and the control part 300 for modulating the transmittance digital signal with a base band signal, and a control part 300 for instructing the alarm generating circuit 304 to generate an alarm on the basis of the alarm signal input from the secondary battery 302, for instructing the symbol mapping circuit 316 to change the symbol mapping, and for controlling the whole portable telephone.

This portable telephone operates in the following manner. The secondary battery 302 outputs an alarm signal to the control part 300 when the battery remaining amount becomes less than or equal to a predetermined value. The control part 300 instructs the alarm generating circuit 304 to generate an alarm on the basis of the alarm signal that is input from the secondary battery 302 and instructs the symbol mapping circuit 316 for change to a symbol mapping that can lower the electric power for transmittance. By this, the symbol mapping circuit 316 lowers the transmittance output by modulation output with a smaller amplitude than the amplitude of a normal mode when the remaining amount of the secondary battery 302 decreases, whereby the period of time in which a call can be made can be extended at the time of decrease in the remaining amount of the secondary battery 302. However, in this invention, change in the symbol mapping to lower the transmittance output decreases the communication quality. Moreover, in this invention, the alarm generating circuit 304 must be mounted, and the electric power consumption of the alarm generating circuit 304 is also needed.

Thus, an object of the present invention is to provide a portable telephone and a method of controlling voice output of a portable telephone capable of extending the period of time in which a call can be made without decrease in the communication quality when the battery remaining amount decreases in the portable telephone onto which a battery is mounted.

Another object of the present invention is to provide a portable telephone and a method of controlling voice output of a portable telephone capable of generating a warning to the user of the portable telephone without addition of a circuit that increases the electric power consumption when the battery remaining amount decreases in the portable telephone onto which a battery is mounted.

Still another object of the present invention is to provide a portable telephone and a method of controlling voice output of a portable telephone capable of making the user of the portable telephone recognize, during the call, that the remaining amount of the battery has decreased when the battery remaining amount decreases in the portable telephone onto which a battery is mounted.

### Disclosure of the Invention

A portable telephone of the present invention is a portable telephone that receives a first voice signal which is significant for communication of intentions between callers and a second voice signal other than the first voice signal together with a determination signal for determining whether the first voice signal is present or not, and converts the voice signals that have been received into sound for output, wherein a battery that supplies electric power to its own circuits is mounted on the portable telephone, the portable telephone including a receiving circuit for receiving the signals; a voice signal sensing circuit connected to the receiving circuit for sensing whether the first voice signal is present or not on the basis of the determination signal; a remaining amount sensing circuit for sensing a remaining amount of the battery; and an output circuit connected to the receiving circuit, the voice signal sensing circuit, and the remaining amount sensing circuit for converting the voice signals into sound for output on the basis of a result of sensing by the voice signal sensing circuit and a result of sensing by the remaining amount sensing circuit.

In the portable telephone having this construction, the voice signal sensing circuit senses whether the first voice signal is present or not, and the remaining amount sensing circuit senses the remaining amount of the battery. The output circuit converts the voice signal into a sound for output on the basis of a result of sensing in the voice signal sensing circuit and a result of sensing in the remaining amount sensing circuit. This can realize, for example, a portable telephone that does not output the second voice signal (background noise signal or the like of the other party) if the first voice signal significant for communication of intentions is not sensed and the remaining amount of the battery is less than or equal to a predetermined value. As a result, the electric power consumption of the output circuit can be reduced while maintaining the communication of intentions between the callers without decrease in the communication quality if the battery remaining amount has become less than or equal to the predetermined value. Further, by finding that the background noise or the like of the other party cannot be heard, the user of the portable telephone in the middle of the call can be made to recognize that the battery remaining amount has become less than or equal to the predetermined value.

More preferably, the second voice signal is a signal that is transmitted at a predetermined time interval when the first voice signal is absent, and the portable telephone of the present invention further includes a sending circuit connected to the receiving circuit and the output circuit for sending the second voice signal that has been received at a predetermined time interval to the output circuit for the time interval.

In the portable telephone having this construction, the sending circuit sends the second voice signal that has been received at a predetermined time interval to the output circuit for the time interval. By this, the portable telephone on the transmitting side does not consume electric power for transmittance only at a predetermined time interval when the first voice signal is absent. Further, the portable telephone on the receiving side does not output the second voice signal (for example, a background noise signal or the like of the other party) when the first voice signal is not sensed and the battery remaining amount is less than or equal to a predetermined value, so that a portable telephone can be realized in which the electric power consumption of the sending circuit and the output circuit can be reduced.

Further preferably, the output circuit of the portable telephone of the present invention includes a circuit for stopping an output of the second voice signal in a case in which the first voice signal is not sensed by the voice signal sensing circuit and in which the remaining amount of the battery sensed by the remaining amount sensing circuit is less than or equal to a predetermined value, and for starting the output of the second voice signal in at least one of a case in which the first voice signal has been sensed and a case in which the remaining amount of the battery is more than or equal to the predetermined value.

In the portable telephone having this construction, the output circuit stops the output of the second voice signal in a case in which the first voice signal is not sensed and in which the remaining amount of the battery is less than or equal to the predetermined value, and starts the output of the second voice signal in at least one of a case in which the first voice signal has been sensed and a case in which the remaining amount of the battery is more than or equal to the predetermined value. This can realize a portable telephone that stops the output of the second voice signal in the case in which the first voice signal significant for communication of intentions is not sensed and in which the remaining amount of the battery is less than or equal to the predetermined value.

Also, the portable telephone of the present invention further includes a control circuit for controlling an operation of the output circuit on the basis of a result of sensing by the voice signal sensing circuit and a result of sensing by the remaining amount sensing circuit.

In the portable telephone having this construction, the control circuit controls the operation of the output circuit on the basis of the result of sensing by the voice signal sensing circuit and the result of sensing by the remaining amount sensing circuit. This can realize, for example, a portable telephone that stops the operation of the output circuit for outputting the second voice signal (background noise signal or the like of the other party) in the case in which the first voice signal significant for communication of intentions is not sensed and in which the remaining amount of the battery is less than or equal to the predetermined value.

Further, the control circuit of the portable telephone of the present invention includes a circuit for stopping the operation of the output circuit in a case in which the first voice signal is not sensed by the voice signal sensing circuit and in which the remaining amount of the battery sensed by the remaining amount sensing circuit is less than or equal to a predetermined value, and for starting the operation of the output circuit in at least one of a case in which the first voice signal has been sensed and a case in which the remaining amount of the battery is more than or equal to the predetermined value.

In the portable telephone of the present invention, the control circuit stops the operation of the output circuit in a case in which the first voice signal is not sensed and in which the remaining amount of the battery is less than or equal to a predetermined value, and starts the operation of the output circuit in at least one of a case in which the first voice signal has been sensed and a case in which the remaining amount of the battery is more than or equal to the predetermined value. This can realize a portable telephone that stops the operation of the output circuit for outputting the second voice signal in the case in which the first voice signal significant for communication of intentions is not sensed and in which the remaining amount of the battery is less than or equal to the predetermined value.

A method of controlling voice output of a portable telephone of the present invention is a method of controlling voice output in a portable telephone that receives a first voice signal which is significant for communication of intentions between callers and a second voice signal other than the first voice signal together with a determination signal for determining whether the first voice signal is present or not, and converts the voice signals that have been received into a sound for output, wherein a battery that supplies electric power to its own circuits is mounted on the portable telephone, the method of controlling the voice output of the portable telephone including the steps of receiving the signals; sensing whether the first voice signal is present or not; sensing a remaining amount of the battery; and converting the voice signals into a sound for output on the basis of a result of sensing in the step of sensing the voice signals and a result of sensing in the step of sensing the remaining amount.

In the method of controlling voice output of a portable telephone having this construction, in the step of sensing whether the first voice signal is present or not is sensed, and in the step of sensing the remaining amount of the battery is sensed. In the step of converting the voice signals the voice signals into a sound for output on the basis of a result of sensing the voice signal and a result of sensing the remaining amount. This can realize, for example, a method of controlling voice output of a portable telephone that does not output the second voice signal (background noise signal or the like of the other party) if the first voice signal significant for communication of intentions is not sensed and the remaining amount of the battery is less than or equal to a predetermined value. As a result, the electric power consumption of the output circuit can be reduced while maintaining the communication of intentions between the callers without decrease in the communication quality if the battery remaining amount has become less than or equal to the predetermined value. Further, by finding that the background noise or the like of the other party cannot be heard, the user of the portable telephone in the middle of the call can be made to recognize that the battery remaining amount has become less than or equal to the predetermined value.

More preferably, the second voice signal is a signal that is transmitted at a predetermined time interval when the first voice signal is absent, and the method of controlling voice output further includes a step of generating a second voice signal at a predetermined time interval on the basis of the second voice signal that has been received at the time interval.

In the method of controlling voice output of a portable telephone having this construction, in the step of generating the second voice signal the second voice signal is generated at the predetermined time interval on the basis of the second voice signal that has been received at the time interval. By this, the portable telephone on the transmitting side does not consume electric power for transmittance only at a predetermined time interval when the first voice signal is absent. Further, the portable telephone on the receiving side does not output the second voice signal (for example, a background noise signal or the like of the other party) when the first voice signal is not sensed and the battery remaining amount is less than or equal to a predetermined value, so that a portable telephone can be realized in which the electric power consumption of the sending circuit and the output circuit can be reduced.

Further preferably, the step of converting the voice signals of the method of controlling voice output of the present invention includes a step of stopping an output of the second voice signal in a case in which the first voice signal is not sensed by the step of sensing the voice signal and in which the remaining amount of the battery sensed by the step of sensing the remaining amount is less than or equal to a predetermined value, and starting the output of the second voice signal in at least one of a case in which the first voice signal has been sensed and a case in which the remaining amount of the battery is more than or equal to the predetermined value.

In the method of controlling voice output of a portable telephone having this construction, in the step of stopping the output the second voice signal is stopped in a case in which the first voice signal is not sensed and in which the remaining amount of the battery is less than or equal to the predetermined value, and the output of the second voice signal is started in at least one of a case in which the first voice signal has been sensed and a case in which the remaining amount of the battery is more than or equal to the predetermined value. This can realize a portable telephone that stops the output of the second voice signal in the case in which the first voice signal significant for communication of intentions is not sensed and in which the remaining amount of the battery is less than or equal to the predetermined value.

Also, the method of controlling voice output of the present invention further includes a step of controlling the step of converting the voice signals to be executed on the basis of a result of sensing by the step of sensing the voice signal and a result of sensing by the step of sensing the remaining amount.

In the method of controlling voice of a portable telephone having this construction, in the step of controlling the step of converting the voice signals the operation of the output is controlled on the basis of the result of sensing the voice signal and the result of sensing the remaining amount. This can realize, for example, a portable telephone that stops the operation of the output circuit for outputting the second voice signal (background noise signal or the like of the other party) in the case in which the first voice signal significant for communication of intentions is not sensed and in which the remaining amount of the battery is less than or equal to the predetermined value.

Further, the step of controlling the step of converting the voice signals in the method of controlling voice output of the present invention includes a step of suppressing the step of converting the voice signals to be executed in a case in which the first voice signal is not sensed by the step of sensing the voice signal and in which the remaining amount of the battery sensed by the step of sensing the remaining amount is less than or equal to a predetermined value, and allowing the step of converting the voice signals to be executed in at least one of a case in which the first voice signal has been sensed and a case in which the remaining amount of the battery is more than or equal to the predetermined value.

In the method of controlling voice output of a portable telephone of the present invention, in the step of controlling the step of converting the voice signals to convert the voice signals is not executed in a case in which the first voice signal is not sensed and in which the remaining amount of the battery is less than or equal to a predetermined value, and to convert the voice signals is executed in at least one of a case in which the first voice signal has been sensed and a case in which the remaining amount of the battery is more than or equal to the predetermined value. This can realize a portable telephone that stops the operation of the output circuit for outputting the second voice signal in the case in which the first voice signal significant for communication of intentions is not sensed and in which the remaining amount of the battery is less than or equal to the predetermined value.

### Brief Description of the Drawings

Fig. 1 is a control block diagram of a portable telephone according to the present invention;
Fig. 2 is a flowchart showing a procedure of voice output control of the portable telephone according to the present invention;
Fig. 3 is an explanatory view of voice output control of the portable telephone according to the present invention;
Fig. 4 is a control block diagram (No. 1) of a conventional portable telephone;
Fig. 5 is a control block diagram (No. 2) of a conventional portable telephone; and
Fig. 6 is a control block diagram (No. 3) of a conventional portable telephone.

### Best Modes for Carrying Out the Invention

Hereafter, the embodiments of the present invention will be described referring to the drawings. In the following description, the same components are denoted with the same symbols. Their names and functions are also the same. Therefore, the detailed description on them will not be repeated where appropriate.

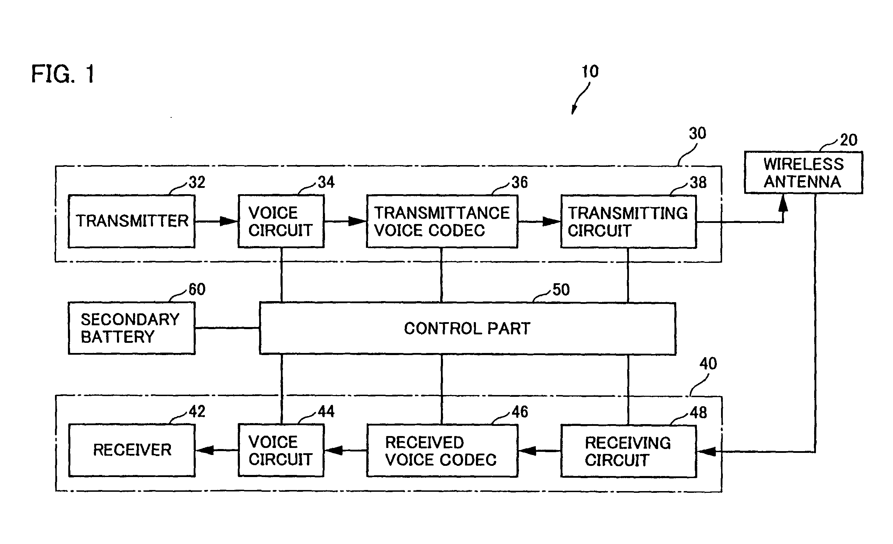

Referring to Fig. 1, a portable telephone 10 of the present invention is a portable telephone that receives an electric signal corresponding to the voice uttered by a user, which is a first voice signal significant for communication of intentions between callers (hereafter simply referred to as "voice signal"), and an electric signal corresponding to the background noise of the user, which is a second voice signal other than the first voice signal (hereafter simply referred to as "noise signal"), together with a determination signal for determining whether the voice signal is present or not. The portable telephone 10 converts the signals that have been received into sound for output.

Here, in the communication currently carried out, the transmitted data already includes a "voice absence flag" showing whether the voice signal is present or not. In the event of absence of the voice signal (the "voice absence flag" is set), the noise signal is transmitted only at a constant interval in the portable telephone on the transmitting side. In such a case, the noise signal once received is repeatedly reproduced in the portable telephone on the receiving side.

A secondary battery 60 for supplying electric power to its own circuits is mounted onto the portable telephone 10. The portable telephone further includes a wireless antenna 20 for receiving a signal transmitted from another portable telephone and for transmitting a signal to another portable telephone, an input circuit 30 connected to the wireless antenna 20 for processing a voice signal and a noise signal before transmittance from the wireless antenna 20, an output circuit 40 for processing the voice signal and the noise signal after receiving from another portable telephone via the wireless antenna 20, and a control part 50 connected to the secondary battery 60, the input circuit 30, and the output circuit 40 for sensing whether the voice signal is present or not on the basis of the received determination signal, for sensing the remaining amount of the secondary battery 60, and for controlling the whole of the portable telephone 10. The secondary battery 60 can output an alarm signal to the control part 50 when the battery remaining amount becomes less than or equal to a predetermined constant value.

The input circuit 30 includes a transmitter 32 such as a microphone that converts a voice uttered by the user of the portable telephone 10 and a sound such as a noise in the background of the user of the portable telephone 10 into a voice analog signal, a voice circuit 34 that is connected to the transmitter 32 and the control part 50 for converting the voice analog signal (voice signal and noise signal) into a voice digital signal, and a transmittance voice CODEC (Coder-Decoder) 36 that is connected to the voice circuit 34 and the control part 50 for encoding the voice digital signal, and a transmitting circuit 38 for converting the coded digital signal into a transmittance digital signal so that the wireless antenna 20 can transmit.

The transmittance voice CODEC 36 can differentiate between the voice signal obtained by conversion of the voice uttered by the user of the portable telephone into an electric signal and the noise signal obtained by conversion of the noise or the like in the background of the user into an electric signal, on the basis of the difference in the frequency band. When the transmittance voice CODEC 36 determines that the voice signal is absent (there is no voice uttered by the user) on the basis of the difference in the frequency band, the control part 50 adds a "voice absence flag (the set state)" showing that "there is no voice uttered by the user" to the digital signal encoded by the transmittance voice CODEC 36. Further, in the event of absence of the voice signal, the control part 50 instructs the transmittance voice CODEC 36 to send the noise signal to the transmitting circuit 38 at a predetermined constant time interval. By doing so, the electric power for transmittance in the case in which the user is not uttering the voice can be reduced.

The output circuit 40 includes a receiving circuit 48 that is connected to the wireless antenna 20 and the control part 50 for converting the transmitted digital signal received by the wireless antenna 20 into a coded digital signal, a received voice CODEC 46 that is connected to the receiving circuit 48 and the control part 50 for decoding the received digital signal into a voice digital signal on the basis of a result of sensing the voice signal and a result of sensing the remaining amount of the battery 60 by the control part 50, a voice circuit 44 that is connected to the received voice CODEC 46 and the control part 50 for converting the voice digital signal into a voice analog signal, and a receiver 42 such as a speaker that is connected to the voice circuit 44 for converting the voice analog signal (voice signal and noise signal) into a sound for output. The received voice CODEC 46 is set at one of a plurality of operation states by a control command from the control part 50. In the voice circuit 44, the voice output is started or stopped by a control signal from the control part.

The receiving circuit 48 converts the transmitted digital signal into a coded voice digital signal, and recognizes the voice absence flag in the converted signal to send a state (set or reset) of the voice absence flag to the control part 50.

When the voice absence flag received from the receiving circuit 48 is set, the control part 50 can send a command to send the noise signal received at a predetermined time interval repeatedly to the voice circuit 44 for the predetermined time interval (background noise process presence command) to the received voice CODEC 46. By doing so, since the user is not uttering a voice on the transmitting side, the background noise can be reproduced on the receiving side at all times even if the noise signal is transmitted only at a predetermined time interval, so that a natural impression can be realized. Here, when the voice absence flag is reset, the control part 50 sends a normal process (the received digital signal is subjected to a decoding process at all times) command to the received voice CODEC 46.

When the voice absence flag received from the receiving circuit 48 is set and an alarm signal is received from the secondary battery 60, the control part 50 can send a command not to send the noise signal received at a predetermined time interval to the voice circuit 44 (background noise process absence command) to the received voice CODEC 46. Further, when the voice absence flag received from the receiving circuit 48 is set and an alarm signal is received from the secondary battery 60, the control part 50 can instruct the voice circuit 44 to stop its output.

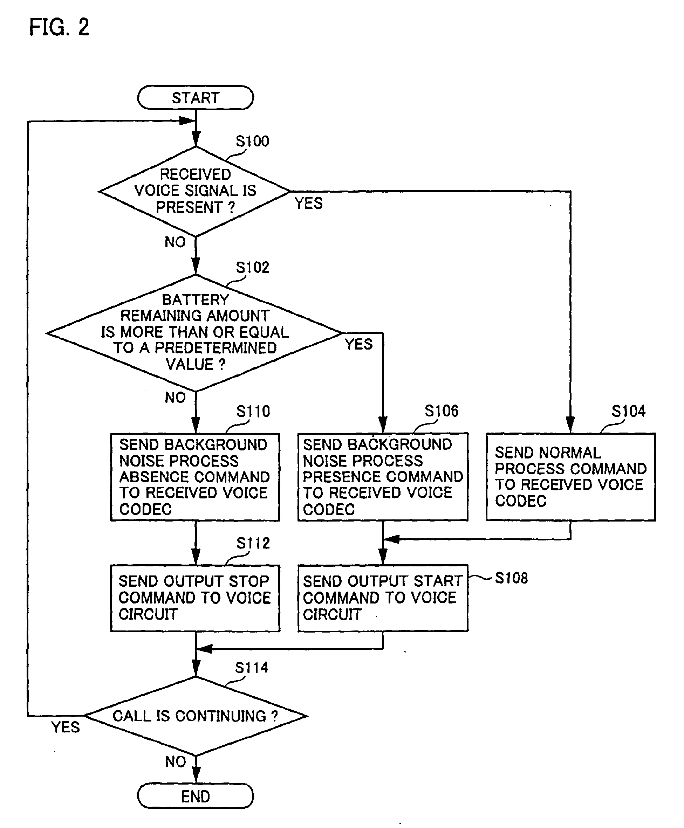

Referring to Fig. 2, a program executed in the portable telephone 10 according to an embodiment of the present invention has the following control structure.

In step (hereafter, step is referred to as S for short) 100, when the power of the portable telephone 10 is turned on and a call starts, the control part 50 determines whether a voice signal is contained in the received signal. This determination is carried out on the basis of the state of the voice absence flag that has been sent from the receiving circuit 48 to the control part 50. If the voice absence flag is reset (YES in S100), the process is transferred to S104. On the other hand, if the voice absence flag is set (NO in S100), the process is transferred to S102.

In S102, the control part 50 determines whether the battery remaining amount of the secondary battery 60 is more than or equal to a predetermined value or not. This determination is carried out on the basis of whether the alarm signal from the secondary battery 60 has been input or not. If there is no input of the alarm signal from the secondary battery 60 (YES in S102), the process is transferred to S106. On the other hand, if there is an input of the alarm signal from the secondary battery 60 (NO in S102), the process is transferred to S110.

In S104, the control part 50 sends a normal process command to the received voice CODEC 46. After processing in S104, the process is transferred to S108.

In S106, the control part 50 sends a background noise process presence command to the received voice CODEC 46. In S108, the control part 50 sends an output start command to the voice circuit 44.

In S110, the control part 50 sends a background noise process absence command to the received voice CODEC 46. In S112, the control part 50 sends an output stop command to the voice circuit 44.

In S114, the control part 50 determines whether the call is continuing or not. If it is determined that the call is continuing (YES in S112), the process is returned to S100. On the other hand, if it is determined that the call is not continuing (NO in S112), the process is ended.

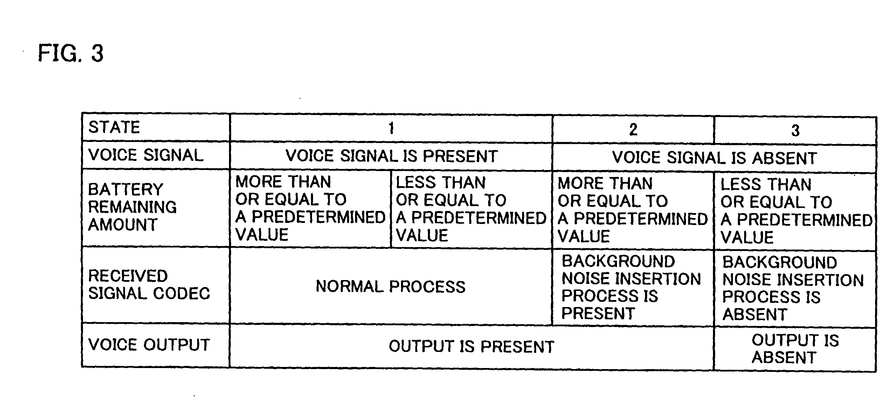

Referring to Fig. 3, the control part 50 determines the three states, i.e. "state 1" in the case where the voice signal is present, "state 2" in the case where the voice signal is absent and the battery remaining amount is more than or equal to a predetermined value, and "state 3" in the case where the voice signal is absent and the battery remaining amount is less than or equal to the predetermined value, and controls the received voice CODEC 46 and the voice circuit 44.

An operation of the portable telephone 10 based on the above-mentioned structure and flowchart will be described.

### [State 1 in Fig. 3]

When a call is started using the portable telephone 10 and the other party of the call utters a voice, a reset voice absence flag and a voice signal including a noise signal are received via the wireless antenna 20. Since the voice absence flag is reset (YES in S100), the received voice CODEC 46 performs a decoding process on the received voice signal and noise signal at all times in accordance with the normal process command sent from the control part 50. The voice circuit 44 converts the digital signal subjected to the decoding process into an analog signal, and the receiver 42 outputs the voice of the other party of the call and the background noise on the other party side.

### [State 2 in Fig. 3]

When the other party of the call does not utter a voice (in many cases, the user of the portable telephone on the other side is in a state of uttering a voice), the transmittance signal CODEC 36 on the other party side transmits a set voice absence flag and a noise signal at a predetermined time interval in order to reduce the electric power for transmittance. The transmitted signal is received via the wireless antenna 20. If the voice absence flag is set (NO in S100) and the battery remaining amount is more than or equal to a predetermined value (YES in S102), the received voice CODEC 46 outputs the received noise signal to the voice circuit 44 repeatedly for a predetermined period of time in accordance with the background noise process presence command that has been sent from the control part 50. The voice circuit 44 converts the digital signal subjected to the decoding process into an analog signal, and the receiver 42 outputs the background noise of the other party side.

### [State 3 in Fig. 3]

If the voice absence flag is set (NO in S100) and the remaining amount of the battery is less than or equal to a predetermined value (NO in S102), the received voice CODEC 46 follows the background noise process absence command that has been sent from the control part 50. In other words, the received voice CODEC 46 does not process the received noise signal. The voice circuit 44 follows the output stop command that has been sent from the control part 50. In other words, the voice circuit 44 does not send the signals to the receiver 42. Since the received voice CODEC 46 does not process the received noise signal and the voice circuit 44 has stopped outputting, nothing can be heard in the receiver 42. The user of the portable telephone 10 can recognize that the battery remaining amount is less than or equal to the predetermined value by finding that the background noise of the other party side cannot be heard at all.

As described above, according to the present invention, when the battery remaining amount has decreased, the period of time in which a call can be made can be extended without decrease in the communication quality, and the user of the portable telephone can be made to recognize that the remaining amount of the battery has decreased.

The embodiments herein disclosed should be considered as being in all respects illustrative and not restrictive. The scope of the present invention is defined by the claims rather than the aforementioned description, and all changes that fall within metes and bounds of the equivalence of the claims are intended to be embraced.

### Industrial Applicability

As described above, according to the portable telephone of the present invention, when the battery remaining amount has decreased, the period of time in which a call can be made can be extended without decrease in the communication quality, and the user in the middle of the call using the portable telephone can be made to recognize that the remaining amount of the battery has decreased without addition of a circuit. For this reason, the portable telephone and the method of controlling the voice output of a portable telephone of the present invention are suitable for a portable telephone onto which a battery is mounted.

## Claims

1. A portable telephone that receives a first voice signal which is significant for communication of intentions between callers and a second voice signal other than the first voice signal together with a determination signal for determining whether said first voice signal is present or not, and converts said voice signals that have been received into a sound for output, wherein a battery that supplies electric power to its own circuits is mounted on said portable telephone, said portable telephone including:
a receiving circuit receiving said signals;
a voice signal sensing circuit connected to said receiving circuit sensing whether said first voice signal is present or not on the basis of said determination signal;
a remaining amount sensing circuit sensing a remaining amount of said battery; and
an output circuit connected to said receiving circuit, said voice signal sensing circuit, and said remaining amount sensing circuit converting said voice signals into a sound for output on the basis of a result of sensing by said voice signal sensing circuit and a result of sensing by said remaining amount sensing circuit.

2. The portable telephone according to claim 1, wherein said second voice signal is a signal that is transmitted at a predetermined time interval when said first voice signal is absent, and said portable telephone further includes a sending circuit connected to said receiving circuit and said output circuit sending said second voice signal that has been received at said time interval to said output circuit for said time interval.

3. The portable telephone according to claim 1, wherein said output circuit includes a circuit stopping an output of said second voice signal in a case in which said first voice signal is not sensed by said voice signal sensing circuit and in which the remaining amount of said battery sensed by said remaining amount sensing circuit is less than or equal to a predetermined value, and starting the output of said second voice signal in at least one of a case in which said first voice signal has been sensed and a case in which the remaining amount of said battery is more than or equal to the predetermined value.

4. The portable telephone according to claim 3, wherein said second voice signal is a signal that is transmitted at a predetermined time interval when said first voice signal is absent, and said portable telephone further includes a sending circuit connected to said receiving circuit and said output circuit sending said second voice signal that has been received at said time interval to said output circuit for said time interval.

5. The portable telephone according to claim 1, wherein said portable telephone further includes a control circuit controlling an operation of said output circuit on the basis of a result of sensing by said voice signal sensing circuit and a result of sensing by said remaining amount sensing circuit.

6. The portable telephone according to claim 5, wherein said second voice signal is a signal that is transmitted at a predetermined time interval when said first voice signal is absent, and said portable telephone further includes a sending circuit connected to said receiving circuit and said output circuit sending said second voice signal that has been received at said time interval to said output circuit for said time interval.

7. The portable telephone according to claim 5, wherein said control circuit includes a circuit stopping the operation of said output circuit in a case in which said first voice signal is not sensed by the voice signal sensing circuit and in which the remaining amount of said battery sensed by said remaining amount sensing circuit is less than or equal to a predetermined value, and starting the operation of said output circuit in at least one of a case in which said first voice signal has been sensed and a case in which the remaining amount of said battery is more than or equal to the predetermined value.

8. A portable telephone that receives a first voice signal which is significant for communication of intentions between callers and a second voice signal other than said first voice signal together with a determination signal for determining whether said first voice signal is present or not, and converts said voice signals that have been received into a sound for output, wherein a battery that supplies electric power to its own circuits is mounted on said portable telephone, said portable telephone including:
receiving means for receiving said signals;
voice signal sensing means connected to said receiving means for sensing whether said first voice signal is present or not on the basis of said determination signal;
remaining amount sensing means for sensing a remaining amount of said battery; and
output means connected to said receiving means, said voice signal sensing means, and said remaining amount sensing means for converting said voice signals into sound for output on the basis of a result of sensing by said voice signal sensing means and a result of sensing by said remaining amount sensing means.

9. The portable telephone according to claim 8, wherein said second voice signal is a signal that is transmitted at a predetermined time interval when said first voice signal is absent, and said portable telephone further includes sending means connected to said receiving means and said output means for sending said second voice signal that has been received at said time interval to said output means for said time interval.

10. The portable telephone according to claim 8, wherein said output means includes means for stopping an output of said second voice signal in a case in which said first voice signal is not sensed by said voice signal sensing means and in which the remaining amount of said battery sensed by said remaining amount sensing means is less than or equal to a predetermined value, and for starting the output of said second voice signal in at least one of a case in which said first voice signal has been sensed and a case in which the remaining amount of said battery is more than or equal to the predetermined value.

11. The portable telephone according to claim 10, wherein said second voice signal is a signal that is transmitted at a predetermined time interval when said first voice signal is absent, and said portable telephone further includes sending means connected to said receiving means and said output means for sending said second voice signal that has been received at said time interval to said output means for said time interval.

12. The portable telephone according to claim 8, wherein said portable telephone further includes control means for controlling an operation of said output means on the basis of a result of sensing by said voice signal sensing means and a result of sensing by said remaining amount sensing means.

13. The portable telephone according to claim 12, wherein said second voice signal is a signal that is transmitted at a predetermined time interval when said first voice signal is absent, and said portable telephone further includes sending means connected to said receiving means and said output means for sending said second voice signal that has been received at said time interval to said output means for said time interval.

14. The portable telephone according to claim 12, wherein said control means includes means for stopping the operation of said output means in a case in which said first voice signal is not sensed by the voice signal sensing means and in which the remaining amount of said battery sensed by said remaining amount sensing means is less than or equal to a predetermined value, and for starting the operation of said output means in at least one of a case in which said first voice signal has been sensed and a case in which the remaining amount of said battery is more than or equal to the predetermined value.

15. A method of controlling voice output in a portable telephone that receives a first voice signal which is significant for communication of intentions between callers and a second voice signal other than said first voice signal together with a determination signal for determining whether said first voice signal is present or not, and converts said voice signals that have been received into a sound for output, wherein a battery that supplies electric power to its own circuits is mounted on said portable telephone, said method of controlling the voice output of the portable telephone including the steps of:
receiving said signals;
sensing whether said first voice signal is present or not;
sensing a remaining amount of said battery; and
converting said voice signals into sound for output on the basis of a result of sensing in said step of sensing said voice signal and a result of sensing in said step of sensing said remaining amount.

16. The method of controlling voice output of a portable telephone according to claim 15, wherein said second voice signal is a signal that is transmitted at a predetermined time interval when said first voice signal is absent, and said method of controlling voice output further includes a step of generating a second voice signal at said time interval on the basis of said second voice signal that has been received at said time interval.

17. The method of controlling voice output of a portable telephone according to claim 15, wherein said step of converting said voice signals includes a step of stopping an output of said second voice signal in a case in which said first voice signal is not sensed by said step of sensing said voice signal and in which the remaining amount of said battery sensed by said step of sensing said remaining amount is less than or equal to a predetermined value, and starting the output of said second voice signal in at least one of a case in which said first voice signal has been sensed and a case in which the remaining amount of said battery is more than or equal to the predetermined value.

18. The method of controlling voice output of a portable telephone according to claim 17, wherein said second voice signal is a signal that is transmitted at a predetermined time interval when said first voice signal is absent, and said method of controlling voice output further includes a step of generating a second voice signal for said time interval on the basis of said second voice signal that has been received at said time interval.

19. The method of controlling voice output of a portable telephone according to claim 15, wherein said method of controlling voice output further includes a step of controlling said step of converting said voice signals to be executed on the basis of a result of sensing by said step of sensing said voice signal and a result of sensing by said step of sensing said remaining amount.

20. The method of controlling voice output of a portable telephone according to claim 19, wherein said second voice signal is a signal that is transmitted at a predetermined time interval when said first voice signal is absent, and said method of controlling voice output further includes a step of generating a second voice signal for said time interval on the basis of said second voice signal that has been received at said time interval.

21. The portable telephone according to claim 19, wherein said step of controlling said step of converting said voice signals includes a step of suppressing said step of converting said voice signals to be executed in a case in which said first voice signal is not sensed by said step of sensing said voice signals and in which the remaining amount of said battery sensed by said step of sensing said remaining amount is less than or equal to a predetermined value, and allowing said step of converting said voice signals to be executed in at least one of a case in which said first voice signal has been sensed and a case in which the remaining amount of said battery is more than or equal to the predetermined value.
